(19) Europäisches Patentamt
European Patent Office
Office européen des brevets

(11) Publication number: **0 427 320 A2**

(12) **EUROPEAN PATENT APPLICATION**

(21) Application number: **90202878.6**

(51) Int. Cl.$^5$: **H01S 3/06**, H01S 3/094

(22) Date of filing: **30.10.90**

(30) Priority: **10.11.89 IT 2235789**

(43) Date of publication of application: **15.05.91 Bulletin 91/20**

(84) Designated Contracting States: **AT BE CH DE DK ES FR GB IT LI LU NL SE**

(71) Applicant: **SOCIETA CAVI PIRELLI S.p.A.**
**Piazzale Cadorna, 5**
**I-20123 Milan(IT)**

(72) Inventor: **Grasso, Giorgio**
**Via Canesi 8**
**I-20052 Monza Milano(IT)**
Inventor: **Righetti, Aldo**
**Via Tolstoi 49**
**I-20146 Milano(IT)**
Inventor: **Fontana, Flavio**
**Via Clerici 14**
**I-20032 Cormano (Milano)(IT)**

(74) Representative: **Marchi, Massimo et al**
**c/o Marchi & Mittler s.r.l. Viale Lombardia 20**
**I-20131 Milano(IT)**

(54) **Active-fiber optical amplifier having a wide pumping band and related active fiber.**

(57) The invention relates to an optical amplifier, in particular for optical fiber telecommunications lines, comprising an erbium-doped laser-emission active optical fiber and a luminous pumping laser source operating at a predetermined wavelength, in which the active optical fiber comprises ytterbium as the further dopant, which exhibits an absorption of light at the emission wavelength of a pumping laser emitter. for example a commercially available three-level diode-pumped laser of the Nd:YAG type, operating between 900 and 950 nm, which is different from the wavelength at which erbium alone can be pumped, and which is adapted to transfer the energy thus absorbed to the erbium contained in the fiber. thereby causing a population inversion thereof adapted to generate a stimulated light emission in the presence of an optical transmission signal. The use of ytterbium in the active fiber enables the achievement of a sufficiently wide spectrum of absorption, such that the use of a laser of high power and low cost for the active fiber pumping within the amplifier is made possible.

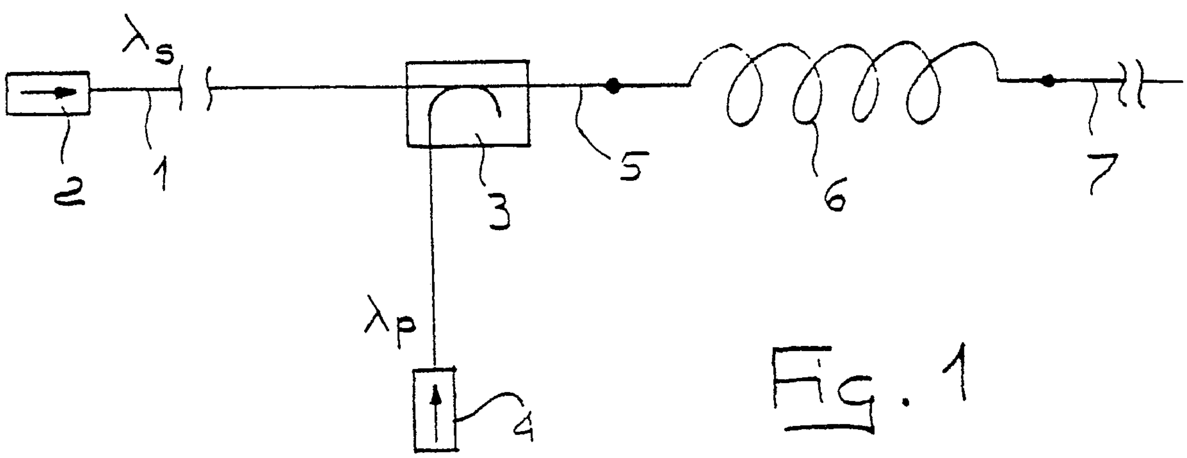


Fig. 1



Xerox Copy Centre

## ACTIVE-FIBER OPTICAL AMPLIFIER HAVING A WIDE PUMPING BAND AND RELATED ACTIVE FIBER

The present invention relates to an active-fiber optical amplifier having a wide pumping band and to the related active fiber.

It is known that optical fibers having a core which is doped with particular substances have stimulated-emission features adapted for use as laser sources and optical amplifiers.

In fact such fibers can be fed by a light source having a particular wavelength, bringing the dopant atoms to an excited energetic state, or pumping band, from which the atoms spontaneously decay within a very short time into a state referred to as laser emission state, in which state they remain for a relatively long time.

When a fiber having a high number of atoms at the excited state in the laser emission level is passed through by a luminous signal having the wavelength corresponding to that emission state, the luminous signal causes the transition of the excited atoms to a lower energetic level, the light emission having the same wavelength as the signal; therefore a fiber of the above kind can be used in order to achieve an amplification of the signal sent thereinto.

Said phenomena can take place at several wavelengths typical of the dopant, thereby giving rise to a fluorescence spectrum in the fiber.

The occurrence of an amplified emission of the above described type is made possible by administering sufficent "pumping" energy to the fiber, capable of keeping it in a state of population inversion, that is capable of keeping a higher number of atoms of the doping substance at the laser emission state than that of the atoms of the same substance that are at the energetic base state; said energy can be supplied to the fiber in the form of luminous energy and therefore the fiber needs to be fed by a light source having a wavelength corresponding to an energetic transition of the doping substance to a higher level than the laser emission level.

A fiber exhibits a light absorption spectrum, that is at the different energetic transitions possible to the dopants contained in said fiber there are wavelengths for which the light absorption is particularly high.

Therefore, for the supply of a sufficient amount of "pumping" energy, said luminous energy is input into the fiber at a wavelength corresponding to a peak of the fiber absorption spectrum having an energetic transition the level of which is the same as or higher than the desired laser emission level.

For example, a fiber the core cf which is doped with erbium, as described in the British Patent Application GB No. 8813769, in order to supply a stimulated emission of the above type, adapted for use in the amplification of optical signals, can be brought to the excited state through the absorption of a luminous pumping energy having a wavelength of about 980 nm.

For the purpose a "pumping" laser supplying luminous energy at such a wavelength must be used.

Among lasers acting in this spectrum area, lasers of the semiconductor diode type can be industrially used in optical-fiber telecommunications lines as they exhibit the required qualities relating to compactness, reliability and cost; said apparatuses, however, if they are made for operating at a wavelength of about 980 nm, have a reduced power (on the order of 10 mW), substantially due to the delicate crystal structure required for generating said emission wavelength, and therefore they are not adapted for supplying power amplifiers to be located along the line.

Semiconductor lasers can also be made which are adapted to produce output powers higher than 50 mW, but such lasers operate at wavelengths ranging from 900 to 950 nm, beyond the spectrum area in which an erbium-doped fiber of the described type can absorb energy, and therefore those lasers cannot be used with said fiber.

Also known are lasers adapted to supply luminous energy having a high power, for example three-level diode-pumped lasers of the Neodymium:YAG type, the use of which would be convenient as sources of luminous pumping energy for optical amplifiers, but their light emission has a wavelength of 947 nm, which is beyond the area in which erbium can be pumped.

Consequently the present invention aims to provide a doped optical fiber exhibiting an important absorption of luminous energy adapted to bring its doping substances or dopants to a laser emission state at the emission of a laser of high power, which fiber is also of practical industrial use and is adapted to operate in order to amplify optical signals in telecommunications lines.

It is an object of the present invention an optical fiber, particularly for use in optical fiber amplifiers for optical telecommunications lines, containing erbium as the laser emission dopant and having a dopant acting as a variator of reflective index, adapted to ensure a wave guide effect, to be fed by a luminous pumping source of predetermined wavelength for generating said laser emission, characterized in that the fiber comprises a further dopant having an important absorption of luminous energy at the emission

wavelength of a pumping laser in an optical amplifier incorporating the fiber, said further dopant being adapted to transfer the absorbed pumping energy to the erbium contained in the fiber, thereby causing a population inversion generating a stimulated luminous emission in the presence of an optical transmission signal.

Preferably the further dopant consists of ytterbium in the form of a trivalent cation.
The concentration of ytterbium in the fiber relative to the contained erbium, expressed as percent by weight of the contained oxides is:

$$1 \leq \frac{[Yb_2O_3]}{[Er_2O_3]} \leq 100,$$

and the concentration of ytterbium by weight relative to the overall weight of the fiber is lower than 5% and preferably lower than 1%.

The dopant capable of varying the index of refraction can be germanium or aluminium.

It is a further object of the present invention an optical amplifier, in particular for optical fiber telecommunications lines, comprising an erbium-doped laser-emission active optical fiber and a luminous pumping laser source, operating at a predetermined wavelength, characterized in that the active optical fiber comprises a further dopant exhibiting a light absorption at the emission wavelength of the pumping laser emitter and is adapted to transfer the absorbed energy to the erbium contained in the fiber, thereby causing a population inversion of the same, adapted to generate a stimulated light emission in the presence of an optical transmission signal.

Preferably the further dopant in the active optical fiber consists of ytterbium in the form of a trivalent cation and the luminous pumping source is a three-level diode-pumped laser of the neodymium:YAG type or a semiconductor-diode laser operating between 900 and 950 nm; the concentration of ytterbium in the active optical fiber of the amplifier with respect to the concentration of the contained erbium, expressed as percent by weight of the oxides contained in said fiber is:

$$1 \leq \frac{[Yb_2O_3]}{[Er_2O_3]} \leq 100,$$

and the concentration by weight of ytterbium relative to the overall weight of the fiber is lower than 5% and preferably lower than 1%.

Further details can be drawn from the following description of the invention, made with reference to the accompanying drawings, in which:

- Fig. 1 shows the diagram of an amplifier using a doped fiber in accordance with the invention;
- Fig. 2 is a diagram showing the energetic transitions of a fiber to be used in an optical amplifier according to the diagram represented in Fig. 1;
- Fig. 3 is a diagram showing the curve of light absorption in an optical fiber made of silica glass, doped with $Er^{3+}$;
- Fig. 4 is a diagram showing the curve of light absorption in an optical fiber made of silica glass, doped with $Er^{3+}$ and $Yb^{3+}$, in accordance with one embodiment of the invention;
- Fig. 5 is a diagram showing the curve of light absorption in an optical fiber made of silica glass, doped with $Er^{3+}$ and $Yb^{3+}$, in accordance with a second embodiment of the invention;
- Fig. 6 is a diagram showing the curve of stimulated emission in the optical fiber referred to in Fig. 4.

For the purpose of amplifying signals in telecommunications optical fibers, amplifiers using optical fibers are conveniently employed; the structure of said amplifiers is diagrammatically shown in Fig. 1 in which 1 denotes a telecommunications optical fiber to which a transmission signal of wavelength $\lambda_s$ is sent, which signal is generated by a signal laser source 2; the signal, which is attenuated after a certain length of line, is sent to a dichroic coupler 3, where it combines with a pumping light of wavelength $\lambda_p$, generated by a pumping laser source 4; the two wavelengths joined in a single fiber 5 are then sent to an active fiber 6

constituting the amplifier element of the signal which, amplified as requested, is finally introduced into the line fiber 7 going then on towards its destination.

For producing the active fiber 6 constituting the amplifier element as a whole, the optical fiber to be used is for example an optical fiber made of silica glass, solution doped with $Al_2O_3$ in order to achieve the desired profile of refractive index adapted to obtain the wave guide, and with $Er_2O_3$, for example of the type described in the previously mentioned British Patent Application No. 8813769, enabling to accomplish an advantageous amplification of the transmission signal by exploiting the laser transitions of erbium; alternatively, it is also possible to use a fiber also containing erbium as laser emission dopant, in which the dopant acting as index variator consists of germanium.

As shown in the diagram of Fig. 2, relating to a fiber of the above type and symbolically representing the available energetic states for one erbium ion in solution in the silica-based matrix of the fiber, the admission of a luminous power into the active fiber at a "pumping" wavelength $\lambda_p$ lower than the wavelength $\lambda_s$ of the transmission signal brings a certain number of ions $Er^{3+}$ present as the dopant in the silica-based matrix of the fiber to an "excited" energetic state 8, hereinafter referred to as "pumping" band, from which ions spontaneously decay into an energetic level 9 constituting a laser emission level.

In the laser emission level 9, $Er^{3+}$ ions can stay for a relatively long time, therefore enabling a population inversion in the active fiber to occur, in which in the upper laser level ions are in greater number with respect to ions in the base level 10; it is known that if a fiber containing a high amount of ions at the laser emission level is passed through by a signal of a wavelength corresponding to such laser transition, the signal causes the stimulated transition of the concerned ions from the laser emission level to a lower level, before the occurrence of their spontaneous decay, accompanied by a luminous emission at the same wavelength, with a cascade phenomenon producing the emission of a greatly amplified transmission signal at the output from the active fiber.

As shown in Fig. 3, the luminous absorption spectrum of a fiber of the above described type, at about 980 nm exhibits a peak of high value: said absorption is associated with the transition, in the presence of light at this wavelength, of erbium ions to the pumping band and therefore the use of the wavelength of 980 nm allows the transferring to the fiber of a high pumping power to be used for amplification purposes.

Such a wavelength however can be easily produced by laboratory apparatus, for example lasers made of titanium sapphire or having semiconductor diodes of reduced power, whereas in the industrial field laser sources of higher power and practical use are desirably used, such as for example commercially available three-level diode-pumped lasers of the neodymium:YAG type, having powers higher than 50 mW and light emission at about 947 nm, or semiconductor-diode lasers operating between 900 and 950 nm, having powers higher than 50 mW, the production of which is in compliance with the cost and reliability features that are adapted for use in line amplifiers.

Such laser sources, however, as above said, have an emission band between 900 and 950 nm, as shown by a hatched area in Fig. 3: as viewed from said figure, however, a fiber containing erbium as a laser emission dopant has a very low light absorption value in this range of wavelengths, insufficient to carry out the desired population inversion generating the laser effect.

It has been noted that optical fibers of the above type containing ytterbium ($Yb^{3+}$) as further dopant, in addition to erbium and to the dopant acting as a variator of refractive index (aluminium or germanium) have an absorption curve of the type shown in Fig. 4, in which there is a very wide area of high absorption adapted to include the emission band of said three-level neodymium:YAG lasers or semiconductor diode lasers of high power; in addition it has also been surprisingly noted that the light absorption at said wavelength, due to the presence of ytterbium, is associated with a laser emission at the same wavelength typical of the erbium-doped fiber, so that said fiber can be used as the active element in an optical amplifier.

It is believed that, in a fiber of the above kind, doped with erbium and ytterbium, there is absorption of energy by ytterbium followed by a transferring of energy from ytterbium ions to erbium ions, which ions can therefore reach the laser emission level corresponding to them and carry out the requested amplification at the wavelength relating to said level.

In support of this thesis it is to be noted that in wavelengths ranging between 1.5 and 1.6 $\mu$m, fibers doped with ytterbium alone do not show a laser effect and therefore the detected light emission for the described fiber cannot be ascribed to ytterbium, whereas the emitted wavelength appears to be typical of erbium.

For experimental purposes an active fiber has been made consisting of a silica-based optical fiber of the "step index" type having the following contents of dopants, by weight:

| | |
|---|---|
| $Er_2O_3$ | 0.06% |
| $Yb_2O_3$ | 6.0% |
| $Al_2O_3$ | 8.5% |

This fiber has given the absorption curve represented in Fig. 4 showing an important light absorption substantially between 890 and 1000 nm.

The emission spectrum of the fiber itself reproduced in Fig. 6, has shown, in the presence of a pumping source having a power of about 80 mW and a wavelength of 930 nm, a profile similar to that of a Si-Al fiber containing erbium alone.

As shown in Fig. 6 in fact the presence of ytterbium in the fiber has not greatly altered the emission spectrum of erbium so that the fiber can be used for the amplification of transmission signals of the type used in optical telecommunications, achieving the same results as with the use of an "active" optical fiber doped with erbium alone.

Said fiber has enabled the construction of an optical amplifier according to the diagram of Fig. 1, in which the active fiber is 5 m long; as pumping laser source a three-level Nd:YAG laser has been used which operates at 947 nm, has a power of 100 mW and which is commercially available.

The transmission signal has been given by a semiconductor laser (In, Ga, As) DFB having a wavelength of 1531 nm and a power of 1 mW; the signal coming to the amplifier input has been attenuated as far as it has reached a power of 1$\mu$w.

Under the above conditions, downstream of the amplifier a gain of 30 dB has been achieved.

By way of comparison the same configuration has been tried with a silica-based active fiber of the "step index" type, doped with $Al_2O_3$ and $Er_2O_3$, containing 600 ppm of $Er_2O_3$ by weight; said amplifier, in the presence of the same pumping powers, at the wavelength of 947 nm used in the previous case has shown a gain lower than 8 dB; on the contrary, the same fiber has shown an important gain with the use of a pumping laser source at 980 nm, which could be achieved by a laser of the semiconductor-diode type, of reduced power (lower than 10 mW), inappropriate to amplify telecommunications signals, or with a laser made of titanium sapphire of higher power but very expensive, which lasers are not convenient for practical use in line amplifiers.

Shown in Fig. 5 is the absorption diagram of a silica-based fiber doped with germanium and in addition containing:

| | |
|---|---|
| $Er_2O_3$ | 0.175% |
| $Yb_2O_3$ | 1.72% |

by weight.

As can be seen, also a fiber in which the desired profile of the refractive index is achieved by the use of germanium has the same absorption development as in the above example and can be successfully used for the accomplishment of an optical amplifier using a three-level Nd:YAG laser or a semiconductor diode laser operating between 900 and 950 nm for carrying out the pumping.

The ytterbium content in a fiber in accordance with the invention is preferably equal to or higher than the erbium content, relating to the transferring efficiency of energy from ytterbium to erbium allowed by the fiber structure, and is in the range of:

$$1 \leq \frac{[Yb_2O_3]}{[Er_2O_3]} \leq 100.$$

The maximum ytterbium content in the fiber is lower than 5% by weight, and preferably lower than 1% by weight; higher values relating to the ytterbium concentration practically cannot be used in an active fiber adapted for use in optical fiber amplifiers, because they would give rise to alteration phenomena as regards the light propagation within the fiber and in addition they would reduce the amplification efficiency of the

fiber itself, that is the gain for each supplied pumping power unit, to non-acceptable values, as a result of the arising of further energetic transitions of a non-reactive type.

Dopants can be introduced into the fiber for example through the solution doping technique which is well-known in the field and ensures satisfactory qualitative results, or through other known techniques, depending upon requirements.

Further dopants can also be introduced into a fiber in accordance with the invention in order to achieve particular behaviours for specific applications.

Many modifications can be made without departing from the scope of the present invention taken in its general features.

## Claims

1. An optical fiber, particularly for use in optical fiber amplifiers for optical telecommunications lines, containing erbium as the laser-emission dopant and having a dopant acting as a variator of refractive index adapted to ensure a waveguide effect, to be fed by a luminous pumping source of predetermined wavelength for generating said laser emission, characterized in that the fiber comprises a further dopant having a significant absorption of luminous energy at the emission wavelength of a pumping laser in an optical amplifier incorporating the fiber, said further dopant being adapted to transfer the absorbed pumping energy to the erbium contained in the fiber, thereby causing a population inversion generating a stimulated luminous emission in the presence of an optical transmission signal.

2. An optical fiber according to claim 1, characterized in that the further dopant consists of ytterbium in the form of a trivalent cation.

3. An optical fiber according to claim 2, characterized in that the concentration of ytterbium in the fiber relative to the contained erbium, expressed as percent by weight of the contained oxides is:

$$1 \leq \frac{[Yb_2O_3]}{[Er_2O_3]} \leq 100,$$

and the concentration of ytterbium by weight relative to the overall weight of the fiber is lower than 5%.

4. An optical fiber according to claim 3, characterized in that the concentration of ytterbium by weight relative to the overall weight of the fiber is lower the 1%.

5. An optical fiber according to claim 1, characterized in that the dopant capable of varying the index of refraction is germanium.

6. An optical fiber according to claim 1, characterized in that the dopant capable of varying the index of refraction is aluminium.

7. An optical amplifier, in particular for optical fiber telecommunications lines, comprising an erbium-doped laser-emission active optical fiber and a luminous pumping laser source, operating at a predetermined wavelength, characterized in that the active optical fiber comprises a further dopant exhibiting a light absorption at the emission wavelength of the pumping laser emitter and is adapted to transfer the absorbed energy to the erbium contained in the fiber, thereby causing a population inversion of the same, adapted to generate a stimulated light emission in the presence or an optical transmission signal.

8. An optical amplifier according to claim 7, characterized in that the further dopant in the active optical fiber consists of ytterbium in the form of a trivalent cation and the luminous pumping source is a three-level diode-pumped laser of the neodymium:YAG type or a semiconductor-diode laser operating between 900 and 950 nm.

9. An optical amplifier according to claim 7, characterized in that the concentration of ytterbium in the active optics fiber of the amplifier with respect to the concentration of the contained erbium, expressed as percent by weight of the oxides contained in said fiber is:

$$[Yb_2O_3]$$

$$1 \le \frac{\phantom{x}}{[Er_2O_3]} \le 100,$$

and the concentration by weight of ytterbium relative to the overall weight of the fiber is lower than 5%.

10. An optical amplifier according to claim 9, characterized in that the concentration of ytterbium is lower than 1%.

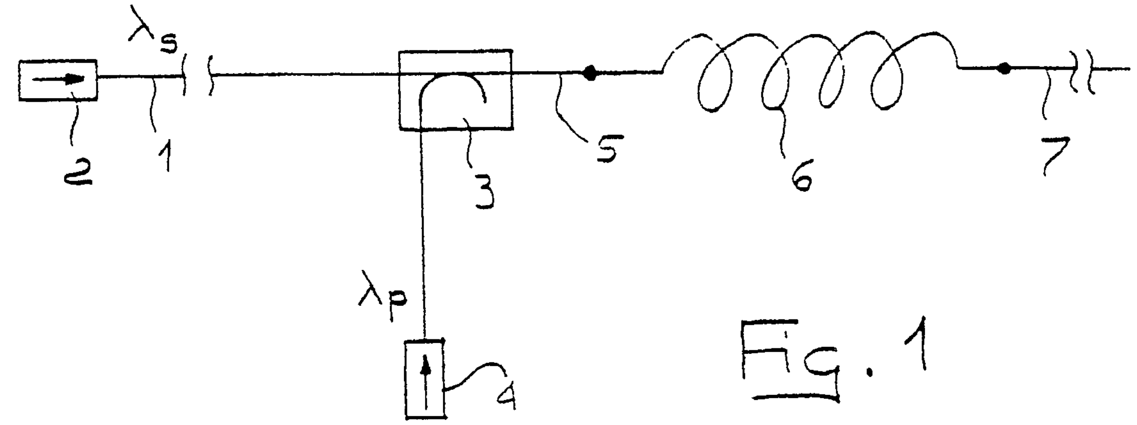


Fig. 1

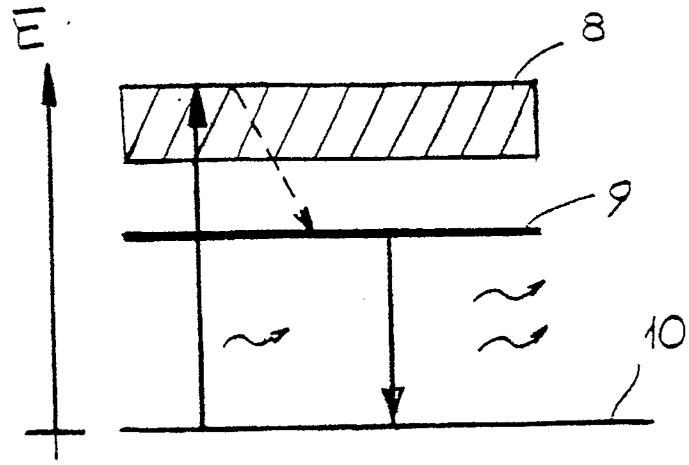


Fig. 2

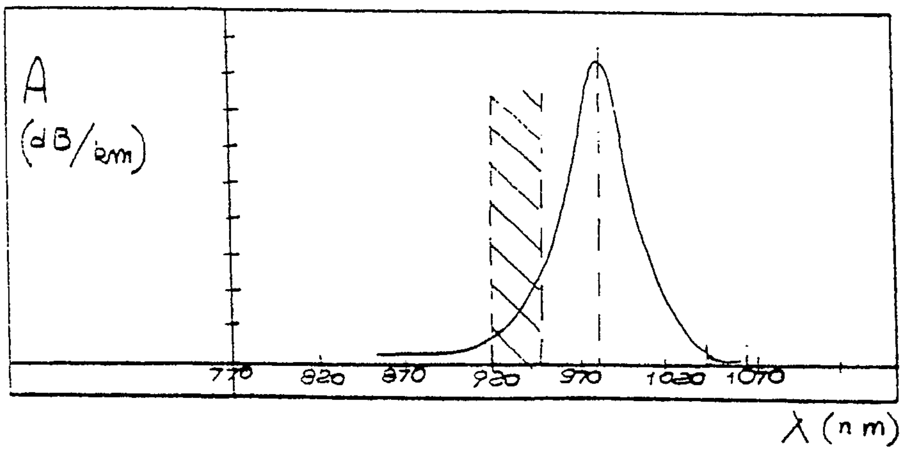


Fig. 3

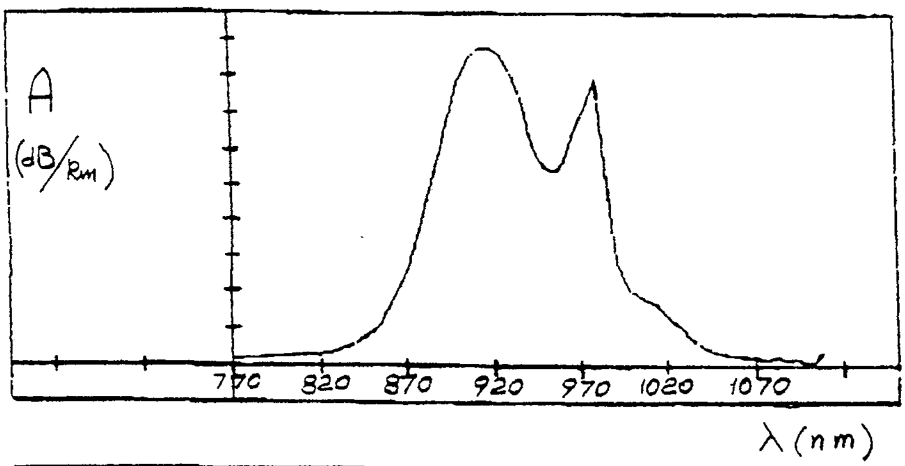


Fig. 4

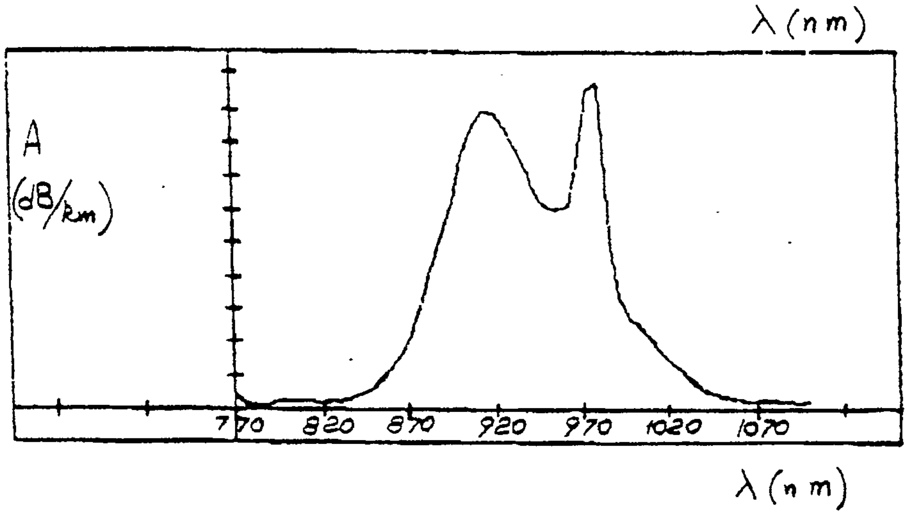


Fig. 5

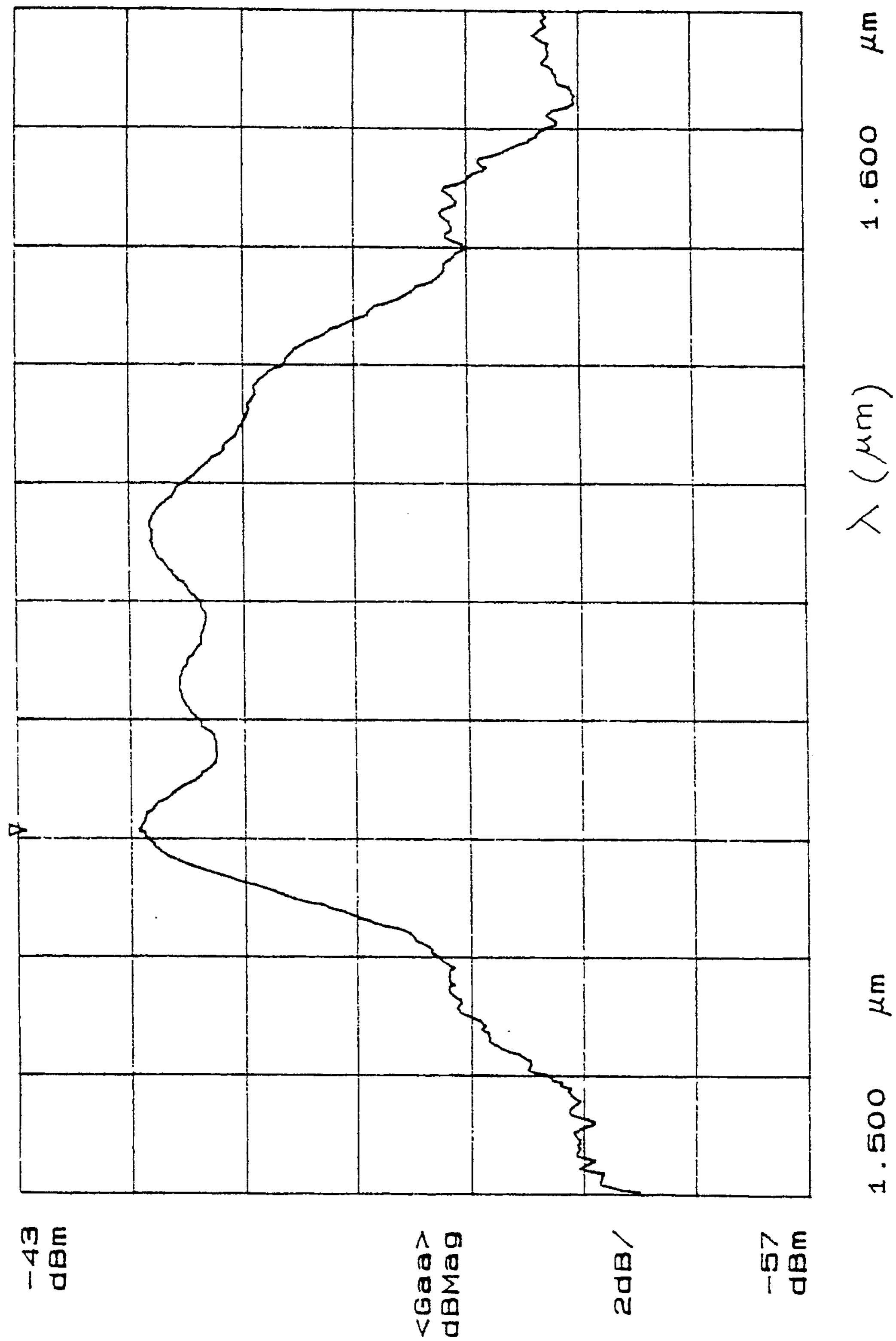


Fig. 6